# EUROPÄISCHE PATENTSCHRIFT

(11) **EP 1 547 415 B1**
(45) Veröffentlichungstag und Bekanntmachung des Hinweises auf die Patenterteilung: **30.08.2006**
(21) Anmeldenummer: 03773475.3
(22) Anmeldetag: 30.09.2003
(51) Int. Cl.: H04Q 7/32

(54) **SIM-KARTE FÜR DEN BETRIEB MIT EINEM ENDGERÄT EINES MOBILKOMMUNIKATIONSNETZES**
SIM-CARD FOR OPERATION WITH A TERMINAL OF A COMMUNICATION NETWORK
CARTE SIM DESTINEE A ETRE UTILISEE AVEC UN TERMINAL D'UN RESEAU DE COMMUNICATION MOBILE

(30) Priorität: 01.10.2002 DE 10246124
(43) Veröffentlichungstag der Anmeldung: 29.06.2005
(73) Patentinhaber: T-Mobile Deutschland GmbH, 53227 Bonn (DE)
(72) Erfinder: MÜLLER, Dietmar, 53227 Bonn (DE); STEIMEL, Georg, 53227 (DE)
(74) Vertreter: Riebling, Peter
(86) Internationale Anmeldenummer: PCT/DE2003/003269
(87) Internationale Veröffentlichungsnummer: WO 2004/032546

(56) Entgegenhaltungen:
- WO-A-00/67515
- DE-A- 19 816 575
- US-A- 5 404 580
- US-B1- 6 230 017
- JOURNAL ARTICLE: 'Digital cellular telecommunications system (Phase 2+); Mobile Stations (MS) features (GSM 02.07 version 7.0.1 Release 1998); ETSI TS 100 906' ETSI STANDARDS Bd. SMG 1, Nr. V701, Juli 1999, SOPHIA-ANTIPO, FR, XP014005593
- JOURNAL ARTICLE: 'Digital cellular telecommunications system (Phase 2+); Multiple Subscriber Profile (MSP) Phase 1 Service description, Stage 1 (GSM 02.97 version 7.1.0 Release 1998); ETSI TS 101 746' ETSI STANDARDS Bd. SMG 1, Nr. V710, August 1999, SOPHIA-ANTIPO, FR, XP014006617
- JOURNAL ARTICLE: 'Electromagnetic compatibility and Radio spectrum Matters (ERM); Additional ElectroMagnetic Compatibility (EMC) requirements for telecommunications equipment for enhanced availability of service in specificapplications; ETSI ES 201 468' ETSI STANDARDS Bd. ERM-EMC, Nr. V111, M{rz 2000, SOPHIA-ANTIPO, FR, XP014005344

## Beschreibung

Die Erfindung betrifft eine SIM-Karte für den Betrieb mit einem Endgerät eines Mobilkommunikationsnetzes nach dem Oberbegriff des Patentanspruchs 1.

In Mobilkommunikationsnetzen sind sogenannte Telematik-Dienste bekannt. Unter dem Begriff Telematik-Dienste wird grundsätzlich eine Maschine zu Maschine Verbindung bzw. Anwendung verstanden, wobei die Telematik-Anwendungen sowohl Dienste in Fahrzeugen als auch in Automaten einschließen. Diese Anwendungen dienen grundsätzlich zur Erfassung von Ereignissen und Messdaten sowie der Regelung und Steuerung von entsprechenden Maßnahmen. Darüber hinaus werden diese Dienste automatisch, d.h. in der Regel ohne Beteiligung von Menschen, abgewickelt.

Beispiele von Telematik-Diensten in Fahrzeugen sind:
- Notrufdienst
- Pannenrufdienst
- Fernsteuerung / Femzugriff
- Fahrzeugfemdiagnose
- Fahrzeugverfolgung
- Fahrzeugdatenerfassung

Beispiele von Telematik-Diensten in Maschinen sind:
- Erfassen von Zählerständen
- Erfassen von Füllständen
- Erfassen von Zuständen und Steuerung
- Ferndiagnose
- Software Download

Der für diese Dienste benötigte Informationsaustausch ist mittels mobiler Kommunikationsnetze realisierbar.

Alle diese Telematik-Dienste zeichnen sich dadurch aus, dass in der Regel eine Kommunikation zwischen zwei festgelegten Kommunikationspartnem stattfindet. Die für die Übertragung eingesetzten Medien können nach heutigem Stand der Technik, Sprache bzw. deren Signalisierungskanäle, DTMF, SMS, GSM-CSD, GPRS, und UMTS sein.

Die DE 198 16 575 A offenbart eine SIM-Karte für den Betrieb mit einem Endgerät eines Mobiltelekommunikationsnetzes, wobei die SIM-Karte als Telematik-SIM-Karte ausgebildet ist, und mit dem Endgerät Verbindungen zu Ziel und/oder Quelladressen herstellbar sind.

Die US-A-5 404 580 beschreibt ein Mobilfunkendgerät mit einem Speicherelement zur Speicherung von Funktionsauswahlinformationen des Endgeräts. Anhand der gespeicherten Funktionsauswahlinformationen können verschiedene Funktionen des Endgeräts aktiviert bzw. deaktiviert werden. Z.B. können abgehende Rufe ganz oder teilweise blockiert werden.

Die Spezifikation ETSI TS 900 906 V7.0.1 (1997-07), "Digital cellular telecommunications system (Phase 2+); Mobile Station (MS) features (GSM 02.07 version 7.0.1 Release 1998, beschreibt die Funktion des "fixed number dialling" für GSM SIM-Karten, bei der ein Nutzer nur Kommunikationsverbindungen zu bestimmten, in der SIM gespeicherten Rufnummern herstellen kann.

Die Aufgabe der Erfindung besteht darin, eine SIM-Karte für den Betrieb in einem Endgerät eines Mobilkommunikationsnetzes anzugeben, welche insbesondere Telematik-Dienste bestmöglich unterstützt.

Diese Aufgabe wird erfindungsgemäß durch die Merkmale des Patentanspruchs 1 gelöst.

Vorteilhafte Ausgestaltungen und Weiterbildungen der Erfindung sind in den abhängigen Ansprüchen angegeben.

Ein wesentliches Merkmal der Erfindung ist, dass die SIM-Karte nur Verbindungen zu festgelegten Zieladressen aufbauen kann und/oder nur von festgelegten Quelladressen angesprochen werden kann. Vorzugsweise ist die SIM-Karte als spezielle Telematik-SIM-Karte ausgebildet.

Das Mobilfunkteilnehmerverhältnis kann z.B. ausschließlich im Rahmen eines definierten sogenannten Virtuellen Privaten Netzwerks VPN betrieben werden. Zu diesem Zweck werden die zulässigen Quelle-Ziel-Bezlehungen in der SIM-Karte gespeichert oder im intelligenten Netz auf einer Datenbank hinterlegt. Eine Kommunikationsbeziehung von und zu Teilnehmern außerhalb des VPN ist grundsätzlich nicht möglich.

Erfindungsgemäß ist eine Gestaltung der notwendigen Administrationsprozesse für die Erstellung der Telematik SIM-Karte notwendig, welche vorzugsweise mit folgenden Eigenschaften versehen werden kann:
1. Prüfung der Ziel- und Quelladressen in Form einer Rufnummer, URL (Uniform Resource Locator) oder APN (Access Point Name), mit der die Telematik-SIM-Karte kommunizieren darf.
2. Anpassung von Adressen und deren Anzahl, dies hat sowohl Dienste- als auch Länderspezifisch zu erfolgen.
3. Länderübergreifende Verfügbarkeit dieser SIM.
4. Übliche Funktionen einer Standard-SIM (wie Rufweiterleitung, default verfügbare Servicenummer) müssen ausgeschlossen werden.
5. Vereinfachte Abrechnungsverfahren.

Durch diese Eigenschaften wird sichergestellt, dass diese Karten nur für die Nutzung der vorgesehenen Dienste von und zu den definierten Quell- und Zieladressen verwendet werden kann; ein Missbrauch ist dadurch unterbunden.

Darüber hinaus bietet diese SIM-Karte die Möglichkeit, weitere Kommunikationsdienste für andere Nutzer zu realisieren.

In einer speziellen Version ist es auch möglich, die weiteren Dienste, die typischerweise nicht als Telematik-Dienste verstanden werden müssen, in der Weise zu beschränken, dass ausschließlich solche Dienste vorgesehen werden, die eine festgelegte Anzahl von Adressen benötigen.

Diese Einschränkung der Verwendung der SIM-Karte auf definierte Quell- und Zieladressen kann mittels verschiedener Komponenten in einer mobilen Übertragungskette realisiert werden:
- Über die Karte
- Über das Endgerät
- Über das Mobilfunknetz

Der Nachteil der Prüfung der Ziel- und Quelladressen in der SIM-Karte bzw. dem Endgerät ist, dass vor einem Verbindungsaufbau nur abgehende Verbindungen vom Endgerät zum Netz hinsichtlich der zugelassenen Adressen auf Richtigkeit geprüft werden können. Ankommende Verbindungen können anhand der optional in Kommunikationsnetzen verfügbaren sogenannten CLIP-Funktion (Calling Line Identification Presentation) auf Zulässigkeit geprüft werden, wobei die Adresse (Rufnummer) des Anrufenden an den Angerufenen übertragen wird. Darüber hinaus birgt eine Realisierung mittels dem Endgerät ein Missbrauchansatz, da die Endgerätefunktionalität FDN (Fix Dialling Number) zur Realisierung einer Einschränkung auf bestimmte Ziel- und Quelladressen nicht von allen Geräten fehlerfrei implementiert wurden.

Demgegenüber ist die Realisierung der eingeschränkten Erreichbarkeit und Zieladressen, z.B. mittels CAMEL (Customized Application Mobile Enhanced Logic), in einem IN (Intelligentes Netzwerk) fähigen Mobilfunknetz möglich. Im wesentlichen geht es bei CAMEL um die Zusammenführung von GSM und Technologien des Intelligenten Netzes IN. Die prinzipielle Konzeption des IN für eine flexibilisierte Implementierung, Einführung und Steuerung von Diensten in öffentlichen Netzen beruht auf der Trennung der Vermittlungsfunktionalität in eine Basisrufvermittlung (Service Switching Point SSP) und eine zentralisierte Dienststeuereinheit (Service Control Point SCP), die über das SS#7 mit dem generischen Protokoll Intelligent Network Application Part INAP kommunizieren. Damit ist eine zentralisierte, flexible und rasche Einführung von neuen Diensten möglich. GSM weist bereits einige Parallelen zum Intelligenten Netz auf. Obwohl in GSM weder die IN-Terminologie noch die Protokolle des IN, namentlich der INAP des SS#7, verwendet werden, entspricht die Struktur des Netzes der Philosophie des IN. Die Aufteilung des GSM-Mobilnetzes in Funktionseinheiten wie MSC und HLR sowie der konsequente Einsatz des SS#7 und die Entwicklung des MAP sind konform mit der Aufteilung des IN bei über INAP kommunizierende Einheiten wie SSP und SCP. Die Philosophie von CAMEL ist es, die Dienstimplementierung in GSM ähnlich dem Vorgehen im IN zu gestalten.

Bei dieser Ausgestaltung der Erfindung werden die vom Endgerät angesprochenen Adressen erst im Netz hinsichtlich ihrer Zulässigkeit überprüft. Ebenso erlaubt diese Technik, dass ankommende Verbindungen vor dem eigentlichen Verbindungsaufbau auf ihre Zulässigkeit überprüft werden.
Es ist hierbei zu empfehlen, dass mittels einsprechender Datenbanken die Zuordnung von Kundenprofilen, einschließlich der zugehörigen Dienste, mit den erlaubten Ziel- und Quelladressen gepflegt werden.

Durch Subskription von Dritten kann der bisher eingeschränkte Nutzungsspielraum des Teilnehmerverhältnisses für diesen Dritten und auf dessen Rechnung erweitert werden. Dies bedeutet, dass zwei oder mehrere unterschiedliche Nutzer (Vertragspartner) physikalisch die selbe SIM-Karte für ankommende und abgehende Verbindungen nutzen könnten. Die Nutzung wird nach dem Verursacherprinzip dem jeweiligen Vertragspartner zugeordnet. Nach diesem Prinzip werden also unterschiedliche Nutzungsrechte einer SIM-Karte abgerechnet und administriert.

## Patentansprüche

1. SIM-Karte für den Betrieb mit einem Endgerät eines
Mobiltelekommunikationsnetzes,
**dadurch gekennzeichnet,**
**dass** sie derart ausgebildet ist, dass mit dem Endgerät nur Verbindungen zu festgelegten Ziel- und/oder Quelladressen herstellbar sind, wobei die in Verbindung mit der SIM-Karte zulässigen Quelle-Ziel-Beziehungen in Form von Ziel- und Quelladressen in einem Speicher der SIM-Karte oder in einer Datenbank des Mobilkommunikationsnetzes hinterlegt sind.

2. SIM-Karte nach Anspruch 1, **dadurch gekennzeichnet, dass** sie als Telematik-SIM-Karte ausgebildet ist.

3. SIM-Karte nach einem der Ansprüche 1 oder 2, **dadurch gekennzeichnet, dass** die Ziel- und Quelladressen Rufnummern, URLs (Uniform Resource Locator) oder APNs (Access Point Name) sind.

4. SIM-Karte nach einem der Ansprüche 1 bis 3, **dadurch gekennzeichnet, dass** die SIM-Karte nur definierte Telekommunikationsdienste unterstützt.

5. SIM-Karte nach einem der Ansprüche 1 bis 4, **dadurch gekennzeichnet, dass** das mit der SIM-Karte verbundene Mobilfunkteilnehmerverhältnis ausschließlich im Rahmen eines definierten Virtuellen Privaten Netzwerks VPN betreibbar ist.

6. SIM-Karte nach einem der Ansprüche 1 bis 5, **dadurch gekennzeichnet, dass** die SIM-Karte mehrere unterschiedliche Teilnehmerverhältnisse umfasst, wobei die Nutzung der SIM-Karte nach dem Verursacherprinzip dem jeweiligen Teilnehmerverhältnis zugeordnet wird.

7. SIM-Karte nach einem der Ansprüche 1 bis 6, **dadurch gekennzeichnet, dass** die SIM-Karte weitere Dienste unterstützt, welche typischerweise nicht als Telematik-Dienste verstanden werden.

8. Verfahren zur eingeschränkten Nutzung von Mobiltelekommunikationsnetzen durch Endgeräte,
**dadurch gekennzeichnet,**
**dass** im Endgerät eine SIM-Karte verwendet wird, die nur Verbindungen zu festgelegten Ziel- und/oder Quelladressen erlaubt, wobei die in Verbindung mit der SIM-Karte zulässigen Quelle-Ziel-Beziehungen in Form von Ziel- und Quelladressen in einem Speicher der SIM-Karte oder in einer Datenbank des Mobilkommunikationsnetzes hinterlegt sind.

## Claims

1. SIM card for operating with a terminal device of a mobile communications network, **characterised in that** said card is constructed in such a way that with the terminal device only connections to designated destination and/or source addresses can be established, wherein the source-destination relationships permitted in connection with the STM card are filed in the form of destination and source addresses in a memory of the SIM card or in a database of the mobile communications network.

2. SIM card according to claim 1, **characterised in that** said card is constructed as a telematics SIM card.

3. SIM card according to any of claims 1 or 2, **characterised in that** the destination and source addresses are dial numbers, URLs (Uniform Resource Locator) or APNs (Access Point Name).

4. SIM card according to any of claims 1 to 3, **characterised in that** the SIM card supports only defined telecommunications services.

5. SIM card according to any of claims 1 to 4, **characterised in that** the mobile communications subscriber relationship associated with the SIM card is operable exclusively within the framework of a defined virtual private network (VPN).

6. SIM card according to any of claims 1 to 5, **characterised in that** the SIM card comprises a plurality of different subscriber relationships, wherein usage of the SIM card is allocated to the subscriber relationship in question in accordance with the causer principle.

7. SIM card according to any of claims 1 to 6, **characterised in that** the SIM card supports other services which typically are not understood as telematics services.

8. Method for restricted use of mobile telecommunications networks by terminal devices, **characterised in that** in the terminal device a SIM card is used which allows only connections to designated destination and/or source addresses, wherein the source-destination relationships permitted in connection with the SIM card are filed in the form of destination and source addresses in a memory of the SIM card or in a database of the mobile communications network.

## Revendications

1. Carte SIM destinée à être utilisée avec un terminal d'un réseau de télécommunication mobile,
**caractérisée en ce qu'**elle est conçue de sorte qu'avec le terminal, seules des liaisons avec des adresses cibles et/ou des adresses sources fixées soient réalisables, les relations source-cible autorisées en liaison avec la carte SIM étant stockées sous forme d'adresses cibles et d'adresses sources dans une mémoire de la carte SIM ou dans une banque de données du réseau de communication mobile.

2. Carte SIM selon la revendication 1, **caractérisée en ce qu'**elle est conçue comme une carte SIM de télématique.

3. Carte SIM selon la revendication 1 ou 2, **caractérisée en ce que** les adresses cibles et les adresses sources sont des numéros d'appel, des URL (Uniform Resource Locator) ou des APN (Access Point Name).

4. Carte SIM selon l'une des revendications 1 à 3, **caractérisée en ce qu'**elle ne permet que l'utilisation de services de télécommunication définis.

5. Carte SIM selon l'une des revendications 1 à 4, **caractérisée en ce que** l'abonnement mobile lié à la carte SIM est utilisable uniquement dans le cadre d'un réseau privé virtuel VPN défini.

6. Carte SIM selon l'une des revendications 1 à 5, **caractérisée en ce qu'**elle comprend plusieurs abonnements différents, l'utilisation de la carte SIM étant affectée selon le principe du responsable-payeur à l'abonnement correspondant.

7. Carte SIM selon l'une des revendications 1 à 6, **caractérisée en ce que** la carte SIM utilise d'autres services qui, typiquement, ne sont pas considérés comme des services télématiques.

8. Procédé pour une utilisation limitée de réseaux de télécommunication mobile par des terminaux,
**caractérisé en ce qu'**on utilise dans le terminal une carte SIM qui n'autorise que des liaisons avec des adresses cibles et/ou des adresses sources fixées, les relations source-cible autorisées en liaison avec la carte SIM étant stockées sous forme d'adresses cibles et d'adresses sources dans une mémoire de la carte SIM ou dans une banque de données du réseau de communication mobile.
